# EUROPEAN PATENT SPECIFICATION

(11) **EP 0 587 309 B1**
(45) Date of publication and mention of the grant of the patent: **29.01.1997**
(21) Application number: 93306252.3
(22) Date of filing: 06.08.1993
(51) Int. Cl.: C08L 27/06, C08L 33/12, C08L 77/00, C08L 101/00

(54) **Toughened polar thermoplastics**
Schlagzäh gemachte polare Thermoplaste
Résines thermoplastiques polaires renforcées

(30) Priority: 18.08.1992 US 931760
(43) Date of publication of application: 16.03.1994
(73) Proprietor: ROHM AND HAAS COMPANY, Philadelphia Pennsylvania 19105 (US)
(72) Inventor: Makower, Samual Jack, Elkins Park, Pennsylvania 19117 (US); Kopchik, Richard Michael, Southampton, Pennsylvania 18966 (US); Stein, Alan Daniel, Yardley, Pennsylvania 19067 (US); Liu, Wen-Long, Richboro, Pennsylvania 18954 (US)
(74) Representative: Angell, David Whilton

(56) References cited:
- EP-A- 0 270 865
- US-A- 3 808 180

## Description

This invention is concerned with the impact modification of thermoplastic polar polymers, such as poly(methacrylates), poly(vinyl chloride), polyamides, such as polycaprolactam by the use of a novel impact modifier, based on a multistage emulsion-prepared polymer wherein the second-stage polymer is foundas domains within the rubbery crosslinked matrix.

For more than 25 years, the plastics industry has sought to modify the impact properties of thermoplastic resins. It has been known that impact modifiers based on acrylic rubbers, such as poly(butyl acrylate) offer reasonable toughness and heat stability. It has also been known that best results are observed when the acrylic rubber is crosslinked and also dispersed into relatively small particles within the thermoplastic matrix, and that this has been best accomplished by preparing a core/shell structure, wherein the core is the crosslinked acrylate rubber and the shell is a polymer, such as one based on methyl methacrylate, compatible with the matrix to be modified. The shell has further been modified to incorporate functional groups, such as acid, capable of reacting with certain functional groups in the matrix polymer, such as amine end groups in polyamides.

These efforts have been commercially successful, but the need still exists for improvements in the balance of impact strength, melt flow, and other properties whilst retaining the matrix properties of heat distortion temperature and hardness and this is the problem addressed by the present invention, which relates to thermoplastic polar polymers modified with acrylic multi-stage impact modifiers for which the structure differs from the conventional core-shell structure commonly found in commercial toughened polar polymers.

Little is taught in the prior art relevant to such impact modifiers of high acrylic ester content. US-A-4,473,679, teaches a multi-stage core/shell composition having a rubbery acrylic shell. US-A-4,474,927, teaches a multi-stage polymer of an acrylate rubber core and a functionalized acrylate rubber shell, the shell containing acid groups, for modification of polyamides. EP-A-295,562, discloses a crosslinked (meth)acrylate ester rubbery phase and an interpenetrating crosslinked styrenic resin phase useful in compatibilization of certain thermoplastics. US-A-4,814,373, teaches elastomeric acrylic gumstocks which have similar structural features to the impact modifiers used in the present invention, but does not teach the utility of such structures as impact modifiers. US-A-5,066,708, teaches polymers similar to those of US-A-4,814,373 useful as damping compositions in blends with thermosettable non-polar elastomers.

EP-A-0270865 discloses impact-resistant compositions comprising (a) 40-99 wt. % of a resin based on a (meth)acrylic polymer and (b) 60-1 wt. % of a multi-layer structure comprising a core based on a crosslinked elastomer intimately blended with a resin as defined in (a). The core is obtained by swelling a seed of a crosslinked butyl acrylate copolymer by means of the absorption of monomers based on methyl methacrylate and by subsequent polymerisation of these monomers.

There exist a number of patents and papers which address the morphology which can be obtained in a multi-stage emulsion polymerization. In general, these claim either a core/shell structure or an interpenetrating network of the two phases, at least one phase being crosslinked. There has been no showing that the "domain" structure taught herein produces useful impact modifiers. Rather, the core/shell polymers are described as being impact-imparting rubbers encased in a hard shell which enables ease of isolation by spray-drying or coagulation and also compatibility with the matrix to be impact-modified.

We have now found that acrylic modifiers which have, in contast to the conventional "core/shell" morphology disclosed in the referenced art, a morphology of domains of crosslinked predominantly methyl methacrylate polymer dispersed through a crosslinked rubbery acrylate ester matrix combine desirable impact resistance and melt properties.

US-A-3,808,180 should be referred to for an excellent description of emulsifiers, graft-linking monomers, cross-linking monomers and initiators useful in making staged (meth)acrylic emulsion polymers, although it does not teach the impact modified blends of the present invention.

This invention provides a toughened blend comprising:
(a) 100 parts of one or more polar thermoplastic polymer:
(b) from 5 to 80 parts of impact modifier comprising at least 50 weight percent of units derived from (C₂-C₈) alkyl acrylate, such as ethyl
acrylate, n-butyl acrylate, n-octyl acrylate and 2-ethylhexyl acrylate, and at least 10 weight percent of units derived from (C₂₁-C₄)-alkyl methacrylate, such as methyl methacrylate, ethyl methacrylate and t-butyl methacrylate; the impact modifier formed from an assemblage of multi-stage cross-linked emulsion-prepared polymer particles. The first stage is polymer predominately (more than 50% by weight) of units derived from one or more (C₂- C₈)-alkyl acrylate and containing at least 2 weight percent to 10 weight percent of units derived from at least one copolymerizable unsaturated carboxylic acid, such as methacrylic acid, acrylic acid, itaconic acid, acryloxypropionic acid, vinylbenzoic acid and from 0.2 to 1.0 weight % of units derived from at least one polyfunctional unsaturated monomer other than butadiene. The balance of units, if any, are of monoethylenically unsaturated copolymerisable monomer and/or butadiene. The second-stage polymer is more than 50 % by weight of units derived from methyl methacrylate, the second-stage polymer being formed as cross-linked domains within the first polymer matrix, the second-stage polymer being less than 40 parts by weight of the total stages of the emulsion polymer particle, the second-stage polymer being free of units derived from maleimide or its N-substituted derivatives, and the second-stage polymer containing from 0.5 to less than 5 weight percent, preferably from 0.5 to 2 weight percent, of units derived from at least one polyunsaturated monomer other than butadiene. The balance, if any, of units is of monoethylenically unsaturated copolymerisable monomer.

A preferred variant of the above blend, for reasons of ease of manufacture and control of the domain structure, is when the second-stage polymer is formed in the presence of the first-stage polymer without equilibration of the monomers which polymerize to form the second-stage polymer.

The invention also provides molded or extruded articles formed from the above blends.

By polar polymer we mean a polymer which contains atoms other than carbon and hydrogen atoms, preferably oxygen or chlorine. Such atoms may be present as pendant groups, as in poly(vinyl chloride), or poly(methyl methacrylate), combined in a cyclic structure, such as in a polymer containing dimethyl-N-methylglutarimide units, or as part of the polar chain, as in a polyamide or polyester. Preferred as polar polymers are poly(vinyl chloride), a poly(alkyl methacrylate), or a polyamide.

For the purposes of this invention and description, polystyrene is a non-polar polymer and the impact modifiers taught herein are ineffective. Surprisingly, they are effective in improving the impact strength of high-impact styrene polymers, which already have large domains of butadiene elastomer incorporated. They are not effective when such high impact polystyrene is further blended with poly(phenylene ethers).

Depending on the nature of the polar polymer, the blend may further contain at least one of filler, plasticizer, anti-oxidant, anti-ozonant, ultraviolet stabilizer, thermal stabilizer, pigment or dye, as are commonly known to the art. For example, when poly(vinyl chloride) (PVC) is the matrix polymer, thermal stabilizers for the PVC, such as organotin compounds, organolead compounds and barium-cadmium salt combinations. For polymers processed at high temperatures, such as the polyamides, thermal stabilizers for the impact modifier, such as organophosphites and hindered phenol antioxidants may be present.

A preferred blend composition, for a balance of cost, impact performance, and ease of isolation, encompasses those compositions wherein the first-stage polymer comprises at least 70% by weight of units derived from butyl acrylate, and wherein the second-stage polymer comprises at least 55% by weight of units derived from methyl methacrylate. For blending with matrix polymers of high polarity, a second-stage of essentially all methyl methacrylate may be preferred. For blending with certain other polymers for control of compatibility with the matrix polymer, such as a matrix of methyl methacrylate/styrene copolymer, or where a higher refractive index for the impact modifier is desired, a blend is preferred wherein the second-stage polymer further is from 20% to 45% by weight of units derived from a vinyl aromatic monomer.

Especially when it is desired to have the second-stage polymer rich in methyl methacrylate, it is preferred that the impact modifier containing from 2 to 10 % by weight of units derived from at least one unsaturated carboxylic acid and, more preferably, to have the carboxylic acid at least 40 % neutralized in the form of an ammonium salt at the time of formation of the second stage.

The discovery which forms the basis for the present invention is that multi-stage acrylic polymers which are not core/shell polymers may be useful as impact modifiers for polar thermoplastics. These multi-stage acrylic polymers in emulsion particle form exhibit a domain structure, the second stage methacrylate polymer being small domains within the continuous acrylic ester polymer network. The use of polymer having such structure as impact modifiers is unknown. US-A-4,814,373, does teach acrylic polymers of such morphology, it places emphasis on high levels of polyfunctional monomer in the second-stage polymerization, with a requirement for an equilibration of second-stage monomers within the first acrylic polymer latex prior to initiation of polymerization, and includes no teaching of any utility as impact modifiers.

Our copending EP-A-0 583 926 filed on the same day as this application (our ref DN 92-057), and based upon USSN 931,759, discloses an improved process for preparing such acrylic multi-stage emulsions and the use of polymers isolated from such emulsions as thermoplastic elastomers which process is preferred for the formation of the modifier polymers used in the present invention. That application describes that such acrylic multi-stage polymers with "domain" morphology can preferably be made by an emulsion process which does not involve a deliberate swelling or equilibration step for the monomers of the to-be-formed second polymer within the first-formed polyacrylate latex. This is accomplished by conducting the second-stage polymerization by a batch or gradual-addition process with concomitant polymerization under conditions where no new particles are formed, that is, with an emulsifier level at least near, and preferably, below the critical micelle concentration. Further, the polymerization is optionally accomplished with the use of co-monomers, such as vinyl aromatic monomers, which aromatic monomers are present as a minority of the total second-stage monomer units, and with the requirement of the presence of acid groups, preferably neutralized with a weak base, in the first polymer stage.

The preferred synthesis method employed is close to those known to the art of sequential or staged emulsion polymerization for many years. First, a crosslinked polymer of predominantly butyl acrylate is prepared by known methods, by either batch or gradual addition methods, under conditions where the particle size is controlled and where the amount of emulsifier remains at a low enough level that once particles are established early in the polymerization, no new particles are formed thereafter. A variety of conventional emulsion polymerization initiators may be used; it is preferred to utilize redox initiators so that initiation at lower temperatures may be accomplished, for ease in controlling the polymerization. A variety of emulsifiers known as useful in sequential emulsion polymerization may be used; preferred for cleanliness of polymerization is sodium dodecylbenzenesulfonate. Because the latices and monomers contain ester groups, it is preferred to conduct the polymerization at pH no higher than about 8 to avoid hydrolysis. A particle size range of from 100 nm to 180 nm is preferred for ease of synthesis, but both larger and smaller particle sizes may be used.

However, to achieve the domain morphology, less than about 40% by weight of the two-stage polymerization should be the final stage; if more is used, some core/shell structure will be found and the unique properties imparted by the domain structure may be adversely affected.

If the second-stage polymer is below 55% methyl methacrylate, its properties in blends with polar polymers will be less attractive, as there will be less compatibility between the various stages and the matrix polymer. Contents of up to 100% methyl methacrylate in the second-stage polymer may be employed, but it becomes difficult to prevent some core/shell formation under the process conditions where equilibration swelling is avoided, unless ammonia-neutralization of the acid is conducted prior to polymerization of the alkyl methacrylate.

The second-stage polymer may further comprise from about 20% to about 45% by weight of units derived from a vinyl aromatic monomer, such as styrene, p-methylstyrene, chlorostyrene and vinyltoluene. Preferred for cost reasons is styrene.

The impact modifier comprises those compositions wherein the first-stage polymer contains from 2 % to 10% by weight of units derived from at least one unsaturated carboxylic acid. One preferred embodiment comprises the composition wherein the carboxylic acid is at least 40 % neutralized in the form of an (ammonium salt, by ammonium meaning NH₄(+), NH₃R(+), NH₂R₂(+), or NHR₃(+) where R is an alkyl group. Use of alkali metal salts in the neutralization will produce a polymer useful in imparting impact, but one which is extremely difficult to process because of its very high viscosity, as well as difficult to disperse into the matrix polymer. The ammonium salt is present during the formation of the second-stage polymer and during conventional isolation, but on exposure to heat, ammonia or the amine is devolatilized and the final molded product will contain the copolymerized acid in the free acid form.

The main component of the first-stage polymerization mixture is a (C₂-C₈)-acrylate, preferably butyl acrylate. Copolymers with other vinyl monomers, such as alkyl methacrylates, may be employed, with up to 20% of the co-monomer. Monomers such as styrene may be present in amounts up to 20% to raise the refractive index to match that of the second-stage polymer and improve clarity or response to addition of colorant of the final blend.

It is a requirement of a crosslinker monomer that it be polyethylenically unsaturated monomer copolymerizable with the other monomers of the same stage, the reactivity of its unsaturated groups being such that substantially all of them react during the same polymerization so that substantially all of the crosslinker monomer units are chemically attached only to a single stage.

It is a requirement of a graftlinker monomer that it be polyethylenically unsaturated monomer copolymerizable with the other monomers of the same stage but having sufficiently low reactivity of one or more of the unsaturated groups to allow significant residual unsaturation to remain in that stage polymer so that substantially all of the graftlinker monomer units are chemically attached to two or more polymer stages.

The distinction between graftlinker monomers and crosslinker monomers may not be clean-cut, depending on relative reactivities of double bonds of these monomers with various core and shell monomers, and on the extent of conversion. Thus, in some instances, a crosslinker monomer may participate in grafting reactions, and a graftlinker monomer may cause the core to become crosslinked.

In general therefore, in the final polymer, a crosslinking monomer is defined as polyethylenically unsaturated monomer which is chemically attached to only a single stage and graftlinking monomer is defined as polyethylenically unsaturated monomer which is chemically attached to two or more adjacent stages.

However, whatever their attachment in the final polymer, the following are to be regarded as preferred crosslinker monomers: butylene diacrylate or dimethacrylate, divinyl benzene and trimethylolpropane trimethacrylate or triacrylate; and the following are to be regarded as preferred graftlinker monomers: allyl methacrylate and diallyl maleate.

For a list of other useful crosslinker and graftlinker monomers, Owens US-A-3,808,180 should be consulted. It is preferred that graft-linker monomer be present at levels noted above.

It is highly preferred that the second-stage monomers contain at least one graft-linking and/or cross-linking monomer, the levels of from 0.2 to 2.0 weight-percent, based on weight of all second-stage monomers. for maintenance of properties of the blend after thermal processing.

US-A-3,808,108 teaches the presence of hydrophilic monomers in his first-stage polymer for the purpose of controlling water-hazing when the core/shell polymers were used as impact modifiers for methyl methacrylate polymers. In the list of hydrophilic monomers are acrylic and methacrylic acid, but their use, is not exemplified, nor is the conduct of polymerization under conditions which will neutralize the acid groups to leave carboxylic acid salt units in the first-stage polymer disclosed or implied. In the present invention, it is necessary to utilize at least about 2 weight percent of a copolymerizable unsaturated acid, such as acrylic acid, methacrylic acid, itaconic acid or acryloxypropionic acid, during the polymerization, and then preferably to neutralize these at least partially prior to conducting the second-stage polymerization. Neutralization may be done with such bases as ammonium hydroxide and methylamine. Neutralization with other bases may be used, including a combination with ammonia neutralization, if the resulting higher processing torque is not a deterrent.

The conditions of the second-stage polymerization require that there be no excess emulsifier to form new polymer particles, that acid groups be present in the first-stage latex, for compositions very rich in methyl methacrylate that these groups be at least partially neutralized prior to initiation of the second- stage monomers, that the second-stage monomer composition be at least 55% methyl methacrylate, and preferably that there be no deliberate equilibration step of the second-stage monomers in the presence of the first polymer particles prior to initiation.

The polymerization may be initiated at room temperature or higher; it may be initiated thermally or with redox initiation; and the second monomers may be added all at once or gradually.

The domains of the second-stage polymer are small, generally of the order of ca. 2 to 50 nanometers, preferably 10 to 30 nanometers, which accounts for the excellent optical properties of the isolated polymers, even if the refractive index of the second- stage domain-forming polymer is not exactly matched to that of the first-stage polymer.

After completion of polymerization, the polymer particles may be blended with appropriate stabilizers against light and heat. Such stabilizers may be added to the polymeric emulsion prior to isolation. Such stabilization is most appropriate for the modification of thermoplastics requiring higher melt temperatures for processing than those required for poly(methyl methacrylate).

The term "assemblage" has been chosen to represent the form in which the impact modifier will be utilized, and on which the physical, chemical, and morphological parameters will be determined. Although a domain structure may be seen in the individual particles, it is much easier to examine an assemblage of particles for such features. The assemblage may be formed by evaporation of the emulsion, with heat if necessary, to form a coherent film, or by coagulation or otherwise de-stabilizing the polymeric emulsion, followed by some application of heat and/or pressure to form a coherent sheet, film, molding, or extrudate.

The confirmation of the desired morphology can be made by either examination of the polymer particles directly, by casting a thin film with minimal heat history and then examining the film, or examining a molded part. The samples can be selectively stained to highlight either acrylate groups or styrenic groups; most effective is the ruthenium staining technique for styrene groups (Trent et al., Macromolecules, 16, 588 (1983)). For examination of particle structure, 10% of the emulsion is combined with a binder emulsion of butyl acrylate 52/ methyl methacrylate 46.7/ methacrylic acid 1.3 and additional emulsifier (5%), usually sodium lauryl sulfate, is added. Samples are dried to films, cryosectioned, and exposed to ruthenium tetroxide vapors for one hour.

The particles as prepared in emulsion may be isolated in a variety of ways as a dry solid. The particles, particularly those with a low second-stage content, are generally too soft to spray-dry, and a third hard non-crosslinked phase may be polymerized onto the particles, similar to the method described in U.S. Patent 5,066,708, to aid in isolation. Such polymers will be somewhat stiffer and harder. The third polymer is preferably a polymer formed from methacrylate units similar to those used in the second-stage, but no multifunctional monomer is employed. To prevent the third stage polymer from forming within the acrylate polymer, it is preferable to lower the pH, and to use methyl methacrylate homopolymer (or a polymer at least 90 weight percent methyl methacrylate), whose polymer is less likely to form inside the polyacrylate.

Partial agglomeration of the particles, so as to lower the amount of third phase polymer required for coverage, may be carried out prior to formation of the third stage and spray-drying.

A preferred isolation method is coagulation and de-watering. The emulsion may be coagulated by addition of salt, by freezing and thawing, or by addition of water-miscible solvents. "Salt" is not restricted to sodium chloride, but can include many water- soluble materials used in the coagulative art, such as sodium, potassium, calcium, zinc, aluminum or magnesium salts which are soluble, such as nitrates, chlorides, sulfates, phosphates and hypophosphites.

The wet cake may be dewatered by filtration and drying, preferably with some mechanical operation which wrings water, salts, emulsifier from the polymer prior to final drying. Equipment used for the coagulation and isolation of synthetic or natural rubber latices can be used for this purpose, such as an Anderson expeller. Continuous coagulation may be used. If a non- compacted powder is wished, the method described above for spray- dried polymer of polymerizing an outer stage of hard polymer may be used, or a staged coagulation method such as taught in US-A-4,463,131, may be used.

An especially preferred method, if the impact modifier is desired in pelletized form, is that of extruder coagulation followed by washing and de-watering in the liquid state. Such an operation is taught in US-A-3,751,527, which should be consulted for details. In this operation, the TPE is recovered as pellets which can readily be processed in final objects. Many coagulants can be used, as taught in Bortnick. A preferred coagulant for acceptable color is calcium hypophosphite, as taught in US-A-4,602,083, which should be consulted for details.

The impact modifier and/or the final blend may contain additives, such as thermal or oxidative stabilizers, anti-ozonants, dyes, colorants, fillers and lubricants especially in used under conditions of exposure to weather. Useful for these purposes are phosphites, such as tris(nonylphenyl) phosphite, sulfur compounds, such as dilauryl thiodipropionate, waxes for lubricating purposes, such as paraffin waxes, substituted phenolic antioxidants, such as octadecyl 3,5-di-t-butyl-4-hydroxyhydrocinnamate, and benzotriazole light stabilizers, such as 2-(2'-hydroxy-5'-methylphenyl)benzotriazole.

The polymers of this invention, whether made by the preferred non-equilibration process or by the equilibration process of US-A-4,814,373 may also be used as damping materials to isolate vibrations, either singly, or in combination with thermosettable elastomers, similar to the methods taught in US-A-5,066,708. With suitable formulation, the polymers in latex form formed by the non- equilibration process also may be useful as caulks, mastics and wall coverings; many such uses for which the acrylic latices are useful are disclosed in US-A-4,814,373. Generally for such uses, it will be preferable to utilize a low level of second-stage polymer and to have the glass temperature of the second-stage polymer not much above room temperature.

### EXAMPLE 1

The following example describes the preparation of an impact modifier with a butyl acrylate first-stage and a methyl methacrylate/styrene copolymer second stage. To a suitable reaction vessel equipped with stirrer, means for adding liquids, a reflux condenser, and a nitrogen sparge line is added 630 parts of water, which is sparged with nitrogen for one hour. Separately are prepared initiator solutions A, B, and C; A is 1% t-butylhydroperoxide in water; B is 1% sodium formaldehyde sulfoxylate in water; C is 1% ferrous sulfate in water. Also separately prepared is an emulsion of water 168 parts, emulsifier (23% sodium dodecylbenzenesulfonate) 16.0 parts, butyl acrylate (BA) 536.4 parts, ethyl acrylate (EA) 144 parts, methacrylic acid (MAA) 18 parts, acrylic acid (AA) 18 parts, diallyl maleate (DAIM) 2.9 parts, and butylene glycol diacrylate (BGDA) 0.7 parts, which stirred emulsion along with 115 parts of rinse water is divided into weighed portions ("shots").

To the water in the reaction vessel is added 2.8 parts of sodium dodecylbenzenesulfonate; the sparge is stopped, 45 parts of the monomer emulsion is added, then 4.3 parts of solution A, then 2.8 parts of solution B, then 0.5 parts of solution C with a 5 part water rinse, then 23 parts rinse water. An exotherm occurs to 31 degrees C; 15 minutes after the peak of the exotherm is added 90 parts of the monomer emulsion and 23 parts of rinse water, then is added 8.6 parts solution A and 5.4 parts solution B. An exotherm occurs to 43 degrees C; 15 minutes after the peak of the exotherm is added 180 parts of the monomer emulsion and 23 parts of rinse, followed by 17.1 parts solution A and 10.8 parts solution B. An exotherm occurs to 57 degrees C. Ten minutes after the peak of the exotherm, is added 360 parts of the monomer emulsion and 23 parts rinse, followed by 34.2 parts of solution A and 22.5 parts solution B. An exotherm occurs to 75 degrees ; 15 minutes after the peak of the exotherm, the reaction is cooled to 50 degrees C., and then is added 229 parts of the monomer emulsion and 23 parts of rinse, then 20.7 parts solution A and 14.5 parts solution B. Fifteen minutes after the final exotherm is added 0.13 parts of t-butylhydroperoxide in 10 parts water and 0.09 parts of sodium formaldehyde sulfoxylate in 10 parts of water; no further exotherm is seen.

Separately is prepared an emulsion of 23 parts water, 2 parts sodium dodecylbenzenesulfonate, 54 parts styrene (St), 124.2 parts methyl methacrylate (MMA), 1.26 parts divinylbenzene (DVB), and 0.54 parts butylene glycol diacrylate. The first-stage emulsion is heated to 85 degrees C., and the second monomer emulsion mix is added over 30 minutes. At the same starting time an initiator solution of sodium persulfate (0.9 parts) in 36 parts water is added over 35 minutes. The reaction mixture is stirred 15 minutes longer at 85 degrees C., and then is "chased" twice in the same manner as in Stage 1. The emulsion is cooled and filtered through cheesecloth to remove any gels.

### EXAMPLE 2

The following example describes the preparation of a similar impact modifier as in Example 1, but where the first-stage acid-containing polymer is neutralized prior to conducting the second-stage polymerization. The first-stage polymerization is conducted as in Example 1. Diluted (ca. 14% ) ammonia is added dropwise with stirring of the emulsion until the pH reached 7.4. The emulsion is then heated to 85 degrees C., and the second-stage reaction conducted as in Example 1.

There are several means by which isolation from the emulsion may be accomplished. In one mode, a portion of one of the emulsion is isolated by freezing in a Dry-Ice/acetone batch, thawing, and filtering, followed by vacuum-oven drying at 60 degrees C. In another mode, the emulsions may be isolated by coagulation as disclosed in the Hung reference in a 0.8 inch (20.3 mm.) Welding Extruder contra-rotating non-intermeshing twin-screw extruder, except that the coagulation is accomplished in a single-screw extruder which then feeds the coagulated polymer and aqueous medium into the dewatering zone. The coagulant is calcium hypophosphite/ acetic acid (6/10 by weight), total amount 1% percent on latex solids. After removal of water and any volatile residuals, stabilizers are added prior to extrusion into pellets, such as tris(nonylphenyl) phosphite, dilauryl thiodipropionate and hydroxybenzotriazoles.

### EXAMPLE 3.

The following example describes the preparation of a variant of Examples 1 and 2, where the first -stage acid-containing polymer contains only methacrylic acid, which acid groups are neutralized prior to conducting the second-stage polymerization, and where the second-stage monomer addition is conducted in two parts. The first-stage polymerization is conducted as in Example 1, but with the acrylic acid replaced with an equivalent amount of methacrylic acid. Diluted (ca. 14%) ammonia is added dropwise with stirring of the emulsion until the pH reached 7.4. The emulsion is then heated to 85 degrees C., and the second-stage reaction conducted by gradual addition as in Example 1.

The polymer of Example 3 is isolated by coagulation in a 0.8 inch diameter (203 mm.) contra-rotating tangential twin-screw extruder.

### EXAMPLE 4

The polymer of Example 3 in latex form is examined by transmission electron microscopy (Hitachi H-7000 STEM at 100 KeV accelerating voltage). At 100,000 X magnification, the emulsion particles within the binder clearly show interpenetration of the polyacrylate first stage by domains of the second, styrene-containing polymer, with domain sizes of the second polymer between 20 to 30 nanometers, the particle size of the latex polymer particles being about 150 nm. Some of the second-stage polymer forms a shell at the surface of the particle.

The morphology of extruded pellets and of molded parts are similar, showing a continuous structure of the acrylate first-stage polymer (resulting from the thermal history of the processing steps, which eliminates the individual latex polymer structure), and domains of the styrene-containing second stage polymer.

The polymers of Examples 1 and 2 upon similar microscopic examination show a similar structure, wherein the second-stage polymer is located as separate domains primarily within the continuous matrix of the first-stage polymer.

### EXAMPLE 5

In this Example, various weights of the polymer of Example 3 are blended with an "acrylic molding powder", which is a 87/13 methyl methacryiate/ ethyl acrylate copolymer of weight-average MW ca. 110,000, by melt-mixing and extruding as pellets from a 0.8" (20.3 mm.) single-screw extruder operated at 100 rpm. (In all examples herein, values for single screw extruder are reported as Zone-1/ Zone-2/ Zone-3/ Die-1/ Die-2// die pressure (kPa)// melt temperature in degrees C. Here the values are 182/188/193/188/188 degrees C. After drying at 50 degrees C. in vacuo overnight, the pellets are injected molded on an Arburg molder at a pressure of about 800 psi (550 kPa) at ca. 180 degrees C. melt temperature, and a mold temperature (ASTM mold) of ca. 100 degrees C. Tensile properties are measured on a Zwick tester. The control is a commercial toughened clear acrylic molding powder, based on a butyl acrylate/styrene//methyl methacrylate heteropolymer at ca. 40% in poly(methyl methacrylate).

| % Impact Modifier in Blend | Hardness Shore D | Tensile strength max., mPa | Notched Izod, J/m. | |
|---|---|---|---|---|
| | | | 23°C | O°C |
| Control | 86 | 45.5 | 42.7 | 26.7 |
| 35% | 77 | 36.5 | 58.7 | 37.4 |
| 40% | 75 | 33.8 | 69.4 | 53.4 |
| 45% | 72 | 28.2 | 90.7 | 74.7 |

The values seen are indicative of improved impact strength, but with a loss in hardness and tensile strength. The samples are translucent, as the impact modifier is not tailored for a refractive index match with the MMA/EA matrix.

### EXAMPLES 6-8

Polymers are prepared as in Example 5, which give on molding similar physical properties to that of Example 5. In Example 6, all of the butylene glycol diacrylate is removed from both stages; further, the second-stage is split into two portions, all the divinylbenzene being in the first feed, and n-dodecyl mercaptan (x% on monomer) being added in the second feed. Example 7 uses 10-times the amount of mercaptan, but otherwise repeats Example 6. In Example 8, there is no butylene glycol diacrylate in either stage; it is replaced by allyl methacrylate in the second stage. Such polymers will be effective impact modifiers for methyl methacrylate and for poly(vinyl chloride).

### EXAMPLE 9

A polymer of the composition BA/EA/MAA/DALM/BGDA//MMA/St/DVB/BGDA = 80 (74.5/20/5/0.4/0.1// 20 (69/30/0.7/0.3) is prepared in a manner similar to that of Example 1, that is, with no neutralization until completion of the second-stage polymerization, no mercaptan, no equilibration period before polymerization of the second-stage monomers, and gradual addition of the second-stage monomers; however, no acrylic acid is employed. Five shots of activator (B) and catalyst (A) are employed in the first-stage polymerization.

The polymer is isolated, molded and tested as in Example 5, and similar results in modification of poly(methyl methacrylate) will be obtained.

In a similar manner, except for neutralization, the second stage styrene of Example 9 may be replaced with methyl methacrylate, so that the second-stage polymer is essentially all methyl methacrylate. The resulting polymer, after similar isolation, will be an effective impact modifier for the polar polymers taught herein.

### EXAMPLE 10

The polymer of Example 9 is blended with a commercial high-impact polystyrene, whose exact rubber content is unknown; it is sold by Amoco Chemicals as Amoco H4R. Dry blends of the two polymers are made and the mixture melt-blended and pelletized in a 0.8 inch (20.3 mm.) single-screw extruder, at conditions 168/ 171/ 171/ 177/ 177 degrees C. The polymer is molded on a Arburg injection molding machine into ASTM plaques at conditions nozzle/ zone-3/ zone-2/ zone-1 = 85/ 88/ 91/ 88 degrees C. injection pressure 5510 kPa, back pressure 345 kPa, mold temperature 38 degrees C., pieces from which are tested by Dynatup falling dart (ASTM 4272) and Izod (ASTM 256) impact methods. Blend compositions are reported in phr= parts of additive per 100 parts of the matrix polymer. All results are in (ft.lbs// Joules) or (ft.lbs./in.//Joules/m.) All Izod breaks are clean, not hinged. The improvement is especially noted in the unnotched or drop tests.

| Blend | Dyna-Tup | Izod notched | Izod unnotched |
|---|---|---|---|
| Control | 1.8//2.43 | 1.41//75.2 | 22.2//1185 |
| 10 phr | 5.5//7.48 | 1.33//71.0 | 29.2//1560 |
| 20 phr | 6.0//8.18 | 1.47//78.5 | 33.5//1788 |
| 30 phr | 6.9//9.42 | 1.45//77.4 | Buckled |

### EXAMPLE 11

The polymer of Example 9 is blended with a commercial poly(vinyl chloride of K value 51; the formulation used is PVC 100 parts/ organotin stabilizer 2 parts/ ester lubricant 2.7 parts/ wax 0.3 parts/ high molecular weight poly(methacrylate) processing aid 1 part. Dry blends of the two polymers are made and the mixture melt-blended and pelletized in a 0.8 inch (20.3 mm.) single-screw extruder at conditions 166/ 166/ 171/ 177/ 177 degrees C. The polymer is molded on a Arburg injection molding machine into ASTM plaques at conditions nozzle/ zone-3/ zone-2/ zone -1 = 79/ 79/ 77/ 66 degrees C. injection pressure 5860 kPa, back pressure 2400 kPa, mold temperature 32 degrees C.,into plaques for impact testing. Blend compositions are reported in phr= parts of additive per 100 parts of the matrix polymer. All results are in (ft.lbs//Joules) or (ft.lbs./in.// Joules/m.) All Izod breaks for the modified notched samples are hinged, not clean; the unnotched samples with impact modifier buckled but did not break. The unmodified unnotched sample show both brittle and clean breaks; the values in parentheses are for the one clean break of the five samples tested. As is known for core/shell modifiers, 30 phr of impact modifier may be an excessive amount and impact strength will not further improve over about 20 phr.

| Blend Control | Dyna-Tup | Izod notched | Izod unnotched |
|---|---|---|---|
| Control | 7.35//10 | 0.42//22.4 | 50.71(9.45)//2707 (504) |
| 20 phr | 41.93//67 | 20.64//1101 | buckled |
| 30 phr | 35.31//48 | 20.84/ 1112 | buckled |

### EXAMPLE 12

The polymer of Example 9 is blended with a commercial polycaprolactam, MW ca. 18,000. Dry blends of the two polymers are made and the mixture melt-blended and pelletized in a 0.8 inch (20.3 mm.) single-screw extruder at conditions 227/ 227/ 238/ 238/ 232 degrees C. The polymer is molded on a Arburg injection molding machine into ASTM plaques at conditions nozzle/ zone-3/zone-2/ zone -1 = 132/124/121/121 degrees C., injection pressure 3030 kPa, back pressure 345 kPa, mold temperature 60 degrees C., into pieces from which are tested by Dynatup and Izod impact methods. Blend compositions are reported in phr= parts of additive per 100 parts of the matrix polymer. All results are in (ft.lbs// Joules) or (ft.lbs./in.// Joules/m.) All notched Izod breaks are clean until 30 phr of modifier (Example 9 only) is used, when the sample exhibited hinged impact behavior. All unnotched samples buckled on testing.

| Blend | Izod notched | Izod notched |
|---|---|---|
| | Example 9 Modifier | Example 1 Modifier |
| Control | 1.91//102 | 1.91//102 |
| 10 phr | 2.95//157 | 2.49//133 |
| 20 phr | 4.12//220 | 3.21//171 |
| 30 phr | 15.95//851 | 4.25//227 |

## Claims

1. A polymer blend comprising:
(a) 100 parts by weight of polar polymer;
(b) from 5 to 80 parts by weight of impact modifier comprising at least 50 weight percent of (C₂-C₈)-alkyl acrylate units and at least 10 weight percent of (C₁-C₄)-alkyl methacrylate units;
the impact modifier having been formed from an assemblage of multi-stage cross-linked emulsion-prepared polymer particles, the first stage being a polymer containing more than 50% by weight (C₂-C₈)-alkyl acrylate units and containing 2 to 10% by weight copolymerizable unsaturated carboxylic acid units and 0.2 to 1.0% by weight units of polyfunctional unsaturated monomer other than butadiene, the second-stage polymer having been formed in the presence of the first-stage polymer, comprising more than 50 % by weight of methyl methacrylate units, having been formed as cross-linked domains within the first polymer matrix, being less than 40 parts by weight of the total stages of the emulsion polymer particle, being free from units derived from maleimide or its N-substituted derivatives, and containing from 0.5 to less than 5% by weight of units of polyunsaturated monomer.

2. A blend of Claim 1 wherein the second-stage polymer has been formed in the presence of the first-stage polymer without equilibration of the monomers which polymerize to form the second-stage polymer.

3. A blend of Claim 1 or 2, wherein the polar polymer is poly(vinyl chloride), poly(alkyl methacrylate), or polyamide.

4. A blend of any preceding Claim further containing at least one of: filler, plasticizer, anti-oxidant, anti-ozonant, ultraviolet stabilizer, thermal stabilizer, pigment, dye.

5. A blend of any preceding Claim, further characterized in that the first-stage polymer contains at least 70% by weight of butyl acrylate units, and in that the second-stage polymer contains at least 55% by weight of methyl methacrylate units.

6. A blend of Claim 5, wherein the second-stage polymer further contains from 20% to 45% by weight of vinyl aromatic monomer units.

7. A blend of any preceding Claim wherein the first-stage polymer contains from 2 to 10 % by weight of units derived from at least one unsaturated carboxylic acid, said carboxylic acid having been at least 40 % neutralized in the form of an ammonium salt at the time of formation of the second stage.

8. A blend of any preceding Claim wherein the second-stage polymer contains from 0.5 to 2.0 weight % of polyfunctional unsaturated monomer units.

9. A blend of any preceding Claim wherein the impact modifier additionally contains a third-stage polymer which contains no units derived from polyunsaturated monomer but contains at least 90 weight percent of methyl methacrylate units.

10. A molded or extruded article formed from a blend of any preceding Claim.

## Patentansprüche

1. Polymermischung umfassend:
(a) 100 Gewichtsteile eines polaren Polymers,
(b) 5 bis 80 Gewichtsteile eines Schlagfestmachers, umfassend mindestens 50 Gew.-% (C₂-C₈)-Alkylacrylat-Einheiten und mindestens 10 Gew.-% (C₁-C₄)-Alkylmethacrylat-Einheiten,
wobei der Schlagfestmacher aus einem Aufbau von mehrstufigen, vernetzten, durch Emulsion hergestellten Polymerteilchen gebildet worden ist, wobei die erste Stufe ein Polymer ist, das mehr als 50 Gew.-% (C₂-C₈)-Alkylacrylat-Einheiten und 2 bis 10 Gew.-% copolymerisierbare ungesättigte Carbonsäure-Einheiten und 0,2 bis 1,0 Gew.-% Einheiten eines polyfunktionellen ungesättigten Monomers, das anders als Butadien ist, enthält, das Polymer der zweiten Stufe in Gegenwart des Polymers der ersten Stufe gebildet worden ist, mehr als 50 Gew.-% Methylmethacrylat-Einheiten umfaßt, als vernetzte Domänen innerhalb der Matrix des ersten Polymers gebildet worden ist, weniger als 40 Gewichtsteile der Gesamtstufen des Emulsionspolymerteilchens ausmacht, frei von Einheiten ist, die von Maleimid oder dessen N-substituierten Derivaten abgeleitet sind, und von 0,5 bis weniger als 5 Gew.-% von Einheiten eines polyungesättigten Monomers enthält.

2. Mischung von Anspruch 1, wobei das Polymer der zweiten Stufe in Gegenwart des Polymers der ersten Stufe ohne Ausgleich der Monomere, die zur Bildung des Polymers der zweiten Stufe polymerisieren, gebildet worden ist.

3. Mischung nach Anspruch 1 oder 2, wobei das polare Polymer Polyvinylchlorid, Polyalkylmethacrylat oder Polyamid ist.

4. Mischung nach einem der vorstehenden Ansprüche, weiter enthaltend mindestens eines von Füllstoff, Weichmacher, Antioxidationsmittel, Ozonschutzmittel, Ultraviolettstabilisator, Wärmestabilisator, Pigment und Farbstoff.

5. Mischung nach einem der vorstehenden Ansprüche, weiterhin dadurch gekennzeichnet, daß das Polymer der ersten Stufe mindestens 70 Gew.-% Butylacrylat-Einheiten enthält und daß das Polymer der zweiten Stufe mindestens 55 Gew.-% Methylmethacrylat-Einheiten enthält.

6. Mischung nach Anspruch 5, wobei das Polymer der zweiten Stufe weiter 20 bis 45 Gew.-% Vinyl-aromatische Monomereinheiten enthält.

7. Mischung nach einem der vorstehenden Ansprüche, wobei das Polymer der ersten Stufe 2 bis 10 Gew.-% von Einheiten, die von mindestens einer ungesättigten Carbonsäure abgeleitet sind, enthält, wobei die Carbonsäure zum Zeitpunkt der Bildung der zweiten Stufe zumindest zu 40% in Form eines Ammoniumsalzes neutralisiert worden ist.

8. Mischung nach einem der vorstehenden Ansprüche, wobei das Polymer der zweiten Stufe 0,5 bis 2,0 Gew.-% polyfunktioneller ungesättigter Monomereinheiten enthält.

9. Mischung nach einem der vorstehenden Ansprüche, wobei der Schlagfestmacher zusätzlich ein Polymer der dritten Stufe enthält, das keine von einem polyungesättigten Monomer abgeleitete Einheiten enthält, aber mindestens 90 Gew-% Methylmethacrylat-Einheiten enthält.

10. Geformter oder extrudierter Gegenstand, der aus einer Mischung nach einem der vorstehenden Ansprüche gebildet ist.

## Revendications

1. Mélange de polymères comprenant :
(a) 100 parties en poids d'un polymère polaire ;
(b) de 5 à 80 parties en poids d'un modifiant choc, comprenant au moins 50 % en poids de motifs acrylate d'alkyle en C₂-C₈ et au moins 10 % en poids de motifs méthacrylate d'alkyle en C₁-C₄ ;
le modifiant choc ayant été formé à partir d'un assemblage de particules de polymère préparées en émulsion, réticulées, à plusieurs étages, le premier étage étant un polymère contenant plus de 50 % en poids de motifs acrylate d'alkyle en C₂-C₈ et contenant de 2 à 10 % en poids de motifs acide carboxylique insaturé copolymérisables et de 0,2 à 1,0 % en poids de motifs d'un monomère insaturé polyfonctionnel autre que le butadiène ; le polymère du deuxième étage ayant été formé en présence du polymère du premier étage, comprenant plus de 50 % en poids de motifs méthacrylate de méthyle, ayant été formé sous forme de domaines réticulés au sein de la première matrice polymère, représentant moins de 40 parties en poids de la totalité des étages de la particule polymère en émulsion, étant exempt de motifs qui dérivent du maléimide ou de ses dérivés N-substitués, et contenant de 0,5 à moins de 5 % en poids de motifs d'un monomère polyinsaturé.

2. Mélange selon la revendication 1, dans lequel le polymère du deuxième étage a été formé en présence du polymère du premier étage sans équilibrage des monomères qui se polymérisent pour former le polymère du deuxième étage.

3. Mélange selon la revendication 1 ou 2, dans lequel le polymère polaire est le poly(chlorure de vinyle), un poly(méthacrylate d'alkyle) ou un polyamide.

4. Mélange selon l'une quelconque des revendications précédentes, qui contient en outre au moins l'un des additifs suivants : une charge, un plastifiant, un anti-oxydant, un anti-ozonant, un stabilisant contre les rayons ultraviolets, un stabilisant thermique, un pigment et un colorant.

5. Mélange selon l'une quelconque des revendications précédentes, caractérisé en outre en ce que le polymère du premier étage contient au moins 70 % en poids de motifs acrylate de butyle, et en ce que le polymère du deuxième étage contient au moins 55 % en poids de motifs méthacrylate de méthyle.

6. Mélange selon la revendication 5, dans lequel le polymère du deuxième étage contient en outre de 20 à 45 % en poids de motifs monomères vinylaromatiques.

7. Mélange selon l'une quelconque des revendications précédentes, dans lequel le polymère du premier étage contient de 2 à 10 % en poids de motifs qui dérivent d'au moins un acide carboxylique insaturé, ledit acide carboxylique ayant été neutralisé à au moins 40 % sous forme d'un sel d'ammonium au moment de la formation du deuxième étage.

8. Mélange selon l'une quelconque des revendications précédentes, dans lequel le polymère du deuxième étage contient de 0,5 à 2,0 % en poids de motifs d'un monomère insaturé polyfonctionnel.

9. Mélange selon l'une quelconque des revendications précédentes, dans lequel le modifiant choc contient en outre un polymère du troisième étage, qui ne contient pas de motifs dérivant d'un monomère polyinsaturé, mais qui contient au moins 90 % en poids de motifs méthacrylate de méthyle.

10. Article moulé ou extrudé, formé à partir d'un mélange selon l'une quelconque des revendications précédentes.
